# EUROPEAN PATENT APPLICATION

(11) **EP 2 860 490 A1**
(43) Date of publication of application: **15.04.2015**
(21) Application number: 13804287.4
(22) Date of filing: 22.05.2013
(51) Int. Cl.: G01B 11/25

(54) **THREE-DIMENSIONAL MEASUREMENT APPARATUS, AND THREE-DIMENSIONAL MEASUREMENT METHOD**

(30) Priority: 12.06.2012 JP 2012132960
(71) Applicant: Shima Seiki Manufacturing., Ltd., Wakayama-shi, Wakayama 641-0003 (JP)
(72) Inventor: IWAI, Kazutaka, Wakayama-shi, Wakayama 641-0003 (JP)
(74) Representative: Carstens, Dirk Wilhelm
(86) International application number: PCT/JP2013/064277
(87) International publication number: WO 2013/187203

(57) **Abstract**

A lattice is projected multiple times from projectors (P1; P2) onto a measurement target object (1) while being shifted, the measurement target object (1) onto which the lattice is projected is imaged by a camera (C1), and conversion into the three-dimensional shape of the measurement target object (1) is performed. Two projectors (P1; P2) are provided respectively at positions that are close to and far from the camera (C1), and, using phases obtained from images captured during projection from the projector (P1) that is provided at the position close to the camera (C1), phases obtained from images captured during projection from the projector (P2) that is provided at the position far from the camera (C1) are converted into phases by which positions in line of sight directions from the camera (C1) are uniquely indicated. The three-dimensional shape of an object is accurately measured in a short time period.

## Description

### Technical Field

The present invention relates to three-dimensional measurement, and in particular to phase unwrapping achieved by a phase shift method.

### Background Art

A lattice is projected onto a measurement target object from a projector, images are captured by a camera, and thereby the three-dimensional shape of the measurement target object (hereinafter, referred to simply as "measurement object") is obtained (see, for example, Patent Literature 1: JP 3536097B). The lattice whose transmittancy varies periodically in the shape of a sinusoidal wave is arranged in front of the projector, and images are captured, for example, four times while shifting the position of the lattice by one quarter of the period of the sinusoidal wave at a time. If it is assumed that the same pixels of the four images have brightnesses I0 to I3, the phases of the pixels with respect to the lattice are indicated by (I1-I3)/(I0-I2), where the phases indicate the directions of the measurement object seen from the projector. The directions of the pixels seen from the camera are known, and thus, when the directions of the measurement object seen from the projector are defined, three-dimensional positons on the surface of the measurement object are determined based on the principal of stereo measurement. This method is referred to as a phase shift method since phases of the lattice are used.

In the phase shift method, phases 0 to 2π are measured. In order to measure a three-dimensional shape with high accuracy, a lattice that is periodically repeated is used, and it is thus necessary to determine what number of the lattice the phases correspond to. Note that, hereinafter, n denotes what number the lattice is, θ denotes a phase 0 to 2π, and adding the number n to the phase θ to perform conversion into a phase 2nπ + θ is referred to as phase unwrapping. It is known that, when the phase θ varies continuously between adjacent pixels, conversion into a phase 2nπ + θ is performed in addition with a condition that the phase varies continuously. However, when the phase θ significantly jumps between adjacent pixels, that is, when the phase θ varies discontinuously, phase unwrapping is difficult.

In this point of view, Patent Literature 1: JP 3536097B discloses use of a frequency-modulated lattice in which the spatial frequency of the lattice (inverse of the pitch of the lattice) varies periodically. However, such a lattice is difficult to manufacture and, in an area of the lattice in which the spatial frequency is low, the phase resolution capability and also the resolution capability of three-dimensional measurement are low. Patent Literature 2: JP 3500430B proposes using a single-color square-wave lattice in which two types of lattices whose pitches are in the ratio of m:n are composited. Here, however, m × n images are needed and it takes a long time to capture the images. Furthermore, the lattice has a low contrast and thus the measurement accuracy of the phases θ is reduced. Patent Literature 3: JP 4170875B proposes moving a lattice in the direction of projection from a projector so as to obtain the same result as in the case where a plurality of lattices are projected. In this method, however, a mechanism for moving the lattice in the direction that is perpendicular to the projector (projecting direction) is needed.

### Citation List

### Patent Literature

Patent Literature 1: JP 3536097B
Patent Literature 2: JP 3500430B
Patent Literature 3: JP 4170875B

### Summary of the Invention

### Problems to be Solved by the Invention

It is an object of the invention to enable phases θ to be unwrapped easily without significantly extending the measurement time period.

### Means for Solving the Problem

A three-dimensional measurement apparatus according to the present invention relates to a three-dimensional measurement apparatus comprising: a projector that projects a lattice onto a measurement target object such that the lattice is shiftable; a camera that images the measurement target object; and a computer that obtains phases of the measurement target object with respect to the lattice from a plurality of images captured while position of the lattice is shifted, and converts the obtained phases into a three-dimensional shape of the measurement target object, characterized in that two projectors are respectively provided at positions that are relatively close to and far from the camera, and the computer includes: a phase analyzer that obtains rough phases of a surface of the measurement target object from images captured during projection from the projector that is provided at the position close to the camera, and obtains accurate phases of the surface of the measurement target object from images captured during projection from the projector that is provided at the position far from the camera; and a phase unwrapping unit that, using the rough phases, converts the accurate phases into phases by which positions on the surface of the measurement target object in line of sight directions from the camera are uniquely determined.

A three-dimensional measurement method according to the present invention is characterized by: a step for obtaining, by a phase analyzer of a three-dimensional measurement apparatus, rough phases of a surface of a measurement target object from images captured during projection from a projector that is provided at a position close to a camera; a step for obtaining, by the phase analyzer of the three-dimensional measurement apparatus, accurate phases of the surface of the measurement target object from images captured during projection from a projector that is provided at a position far from the camera; and a step for converting, by a phase unwrapping unit of the three-dimensional measurement apparatus, the accurate phases, using the rough phases, into phases by which positions on the surface of the measurement target object in line of sight directions from the camera are uniquely indicated. Note that it is not essential which of the steps of obtaining rough phases and of obtaining accurate phases is first executed.

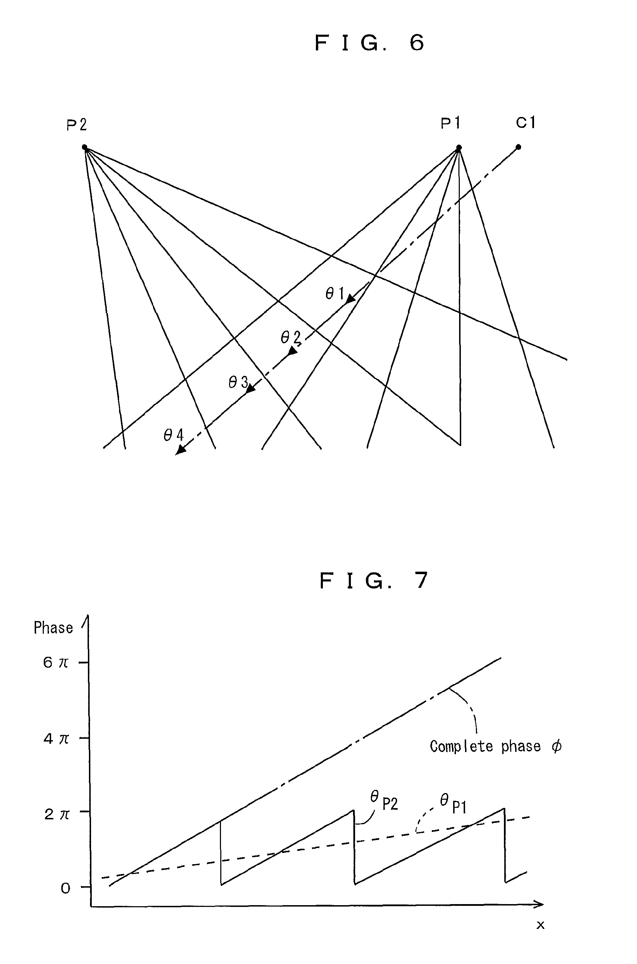

As shown in FIG. 6, when the projector that is closer to the camera performs projection, phases (rough phases) by which positions in the line of sight directions of the camera are uniquely indicated are obtained, but the phases have low spatial resolution capability. On the other hand, when the projector that is far from the camera performs projection, the phases (accurate phases) are obtained that have high spatial resolution capability, but positions in the line of sight directions of the camera are not determined uniquely. Based on the rough phases, approximate values of three-dimensional coordinates of the measurement object surface are known, and, based thereon, approximate values of the accurate phases are known. Furthermore, when the rough phase varies continuously, the accurate phase also varies continuously, and thus a range in which the accurate phase can vary is restricted. Accordingly, with the rough phases, accurate phases by which positions in the line of sight directions of the camera are uniquely determined are converted into. Then, based on the accurate phases, the three-dimensional shape of the object is accurately determined.

According to the present invention, measurement can be performed in a short time period since it is not necessary to capture m × n images as with the conventional technique. Furthermore, it is neither necessary to shift the lattice in the sight line direction, nor is it necessary to use a frequency-modulated lattice. The number of projectors is at least two, and at least one camera, preferably a plurality of cameras are provided. In this specification, descriptions relating to the three-dimensional measurement apparatus also apply to the three-dimensional measurement method without any change, and vice versa, i.e., descriptions relating to the three-dimensional measurement method also apply to the three-dimensional measurement apparatus without any change.

It is preferable that the lattice has a periodic lattice pattern, that, letting one period of the lattice be 0 or more to less than 2π, the accurate phases are θ, where 0 ≤ θ < 2π, and that the phase unwrapping unit is configured to obtain n, which denotes the number of periods from a reference point of the lattice, using on the rough phases, and obtain 2nπ + θ as the phases by which the positions are uniquely determined.

It is preferable that a controller is further included that controls the two projectors such that the projector that is provided relatively far from the camera projects the lattice while the projector that is provided relatively close to the camera shifts the lattice, and the projector that is provided relatively close to the camera projects the lattice while the projector that is provided relatively far from the camera shifts the lattice. The process that takes the most time in the obtainment of images in which the lattice is projected (that may be hereinafter referred to simply as "images") is shifting the lattice. Since, while one projector shifts the lattice, the other projector projects the lattice and an image is captured by the camera, an increase in the time period that is needed for obtaining the image is substantially prevented, and the images are obtained in a short time period. Therefore, it is easy to measure the three-dimensional shape of even an object whose shape is not easily fixed, such as a human body, an animal, a vibrating object, and the like.

It is particularly preferable that the camera serves as a first camera, and a second camera is further provided near the projector that is provided relatively far from the first camera, and the controller be configured to perform control such that both the first camera and the second camera image the measurement target object, irrespective of whether when the projector that is provided relatively close to the first camera projects the lattice, or when the projector that is provided relatively far from the first camera projects the lattice. With this, images are obtained from the two cameras, and a dead zone in the measurement of a three-dimensional shape is reduced. The second camera is a camera that is relatively close to the projector provided far from the first camera, and relatively far from the projector provided close to the first camera.

### Brief Description of Drawings

FIG. 1 is a block diagram showing a three-dimensional measurement apparatus according to an embodiment.
FIG. 2 is a diagram showing a measurement object and a unit according to the embodiment.
FIG. 3 is a block diagram showing a personal computer for measurement according to the embodiment
FIG. 4 is a flowchart showing a three-dimensional measurement algorithm according to the embodiment.
FIG. 5 is a diagram showing light emission and imaging, and shifting a lattice according to the embodiment.
FIG. 6 is a diagram illustrating rough phases and accurate phases according to the embodiment.
FIG. 7 is a diagram showing phase unwrapping according to the embodiment.
FIG. 8 is a diagram showing a measurement result according to the embodiment.

### Description of Embodiment

The following describes preferred embodiments for implementing the invention. Embodiment

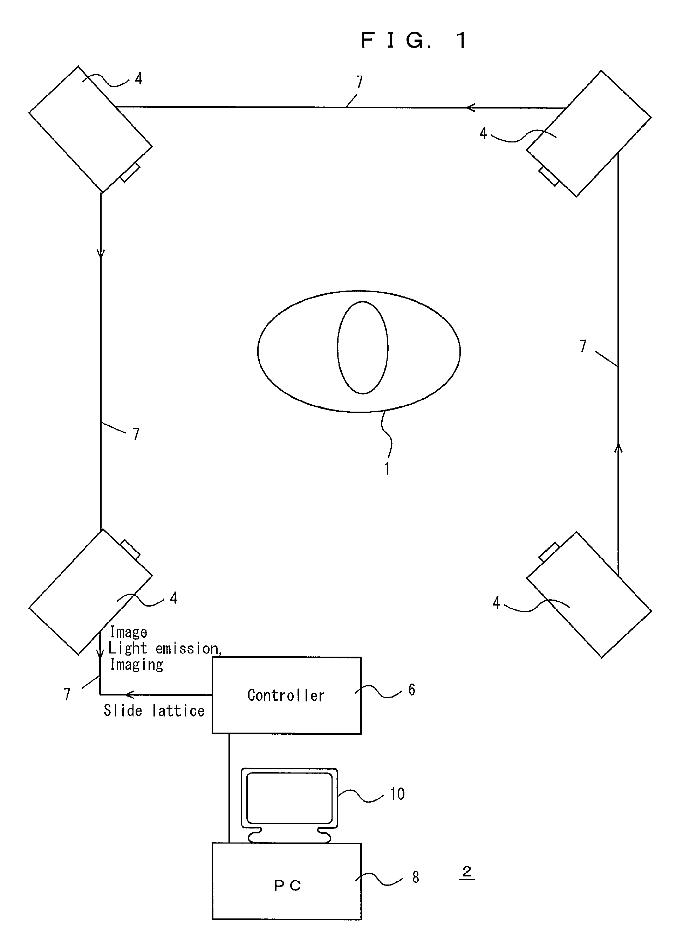

FIGS. 1 to 8 show a three-dimensional measurement apparatus 2 and a three-dimensional measurement method according to an embodiment. In FIG. 1, the reference numeral 4 denotes units for projecting and imaging a lattice, and, for example, four units are arranged around a measurement target object (hereinafter referred to as "measurement object") 1. Note that the measurement object 1 is, for example, a human body, an article of furniture, a machine, an automobile, an electronic device, a building, or the like, and the reason why four units 4 are arranged is that the whole circumference of the measurement object 1 is measured three-dimensionally. For measurement of the whole circumference, three or more to six or less units 4, for example, may be arranged, or one unit may be arranged if only one surface is to be measured. The reference numeral 6 denotes a controller, and the controller controls shifting of a lattice, light emission of the projectors, and imaging of the cameras in the units 4, and transmits related instructions to the units 4 via a LAN 7. Furthermore, the units 4 transmit captured images to the controller 6 via the LAN 7, and the controller 6 transfers the images to a personal computer 8 for calculation. The personal computer 8 may be integrated with the controller 6 or the unit 4, or may be another type of computer instead of the personal computer. The reference numeral 10 is a monitor, and used for a user to perform input, for display of a measurement result, and the like.

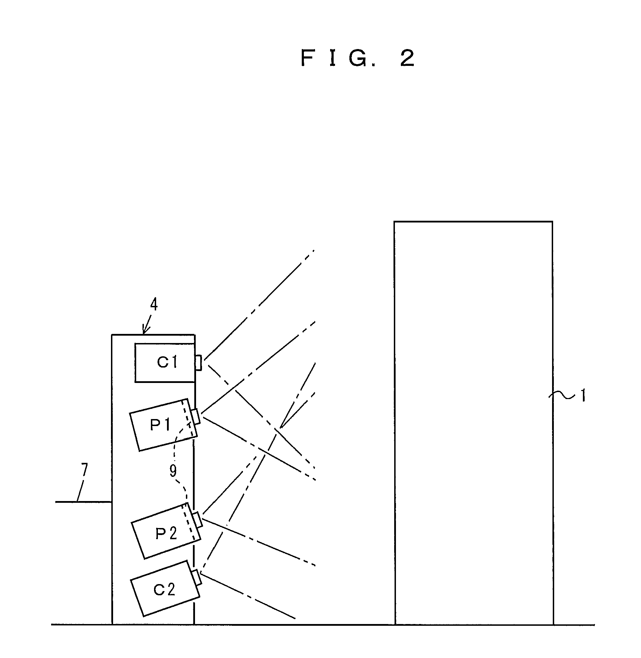

As shown in FIG. 2, the unit 4 includes two cameras, namely, the upper camera C1 and the lower camera C2, and two projectors, namely, the upper projector P1 and the lower projector P2, where the index1 denotes the upper components, and the index2 denotes the lower components. The projectors P1 and P2 each include, for example, a LED panel that serves as a light source, and have, on the side of projecting light, a substrate that is a glass plate or the like on which a lattice of a square wave, a sinusoidal wave, or the like is periodically printed. In a phase shift method, the same scene is imaged three times or more while the position of the lattice is shifted, and the projectors P1 and P2 each include a shift mechanism 9 for shifting the lattice. According to the embodiment, for ease of phase calculation, the same scene is imaged four times, but three times may suffice. In the embodiment, since the upper and lower projectors P1 and P2 are used in combination, the lattice is horizontal stripes, and the shift direction is vertical, and when the camera C1 serves as a reference, the projector P1 is a projector that is provided at a position relatively close to the camera C1 and the projector P2 is a projector that is provided at a position relatively far from the camera C1. When the camera C2 serves as a reference, the projector P2 is a projector that is provided at a position relatively close to the camera C2, and the projector P1 is a projector that is provided at a position relatively far from the camera C2. Furthermore, in a case where a projector of one unit is used in combination with a projector of another unit that is located at the same height, the lattice is vertical stripes, and the shift direction is horizontal. Furthermore, the cameras C1 and C2 are digital cameras.

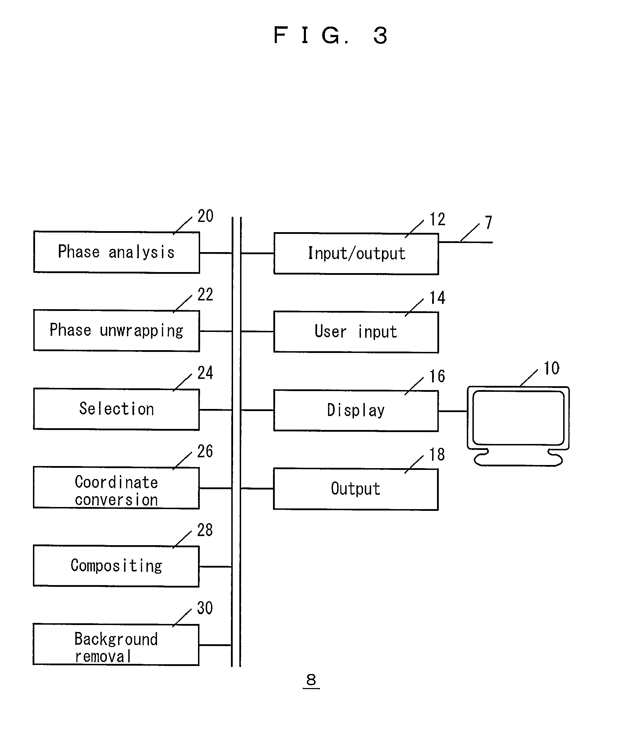

FIG. 3 shows a configuration of the personal computer 8, in which an input/output 12 is connected to the units 4 via the controller 6. A user input 14 receives an instruction from a user, and a display controller 16 controls the monitor 10. An output 18 outputs three-dimensional measurement data. A phase analyzer 20 analyses phases by a phase shift method, and obtains rough phases and accurate phases using the cameras C1 and C2 in combination with the projectors P1 and P2 according to the embodiment, the rough phases being obtained by using a camera in combination with a projector arranged close to the camera, and the accurate phases being obtained by using a camera in combination with a projector arranged far from the camera. For example, light emitted by the same projector is used, and four images are captured while the lattice is shifted by one quarter of the pitch at a time, and the brightnesses in the images are defined as I0 to I3. Note that the pitch is the period of the lattice. Accordingly, (I1-I3)/(I0-I2) indicates tan⁻¹θ, and the phase θ is determined based thereon.

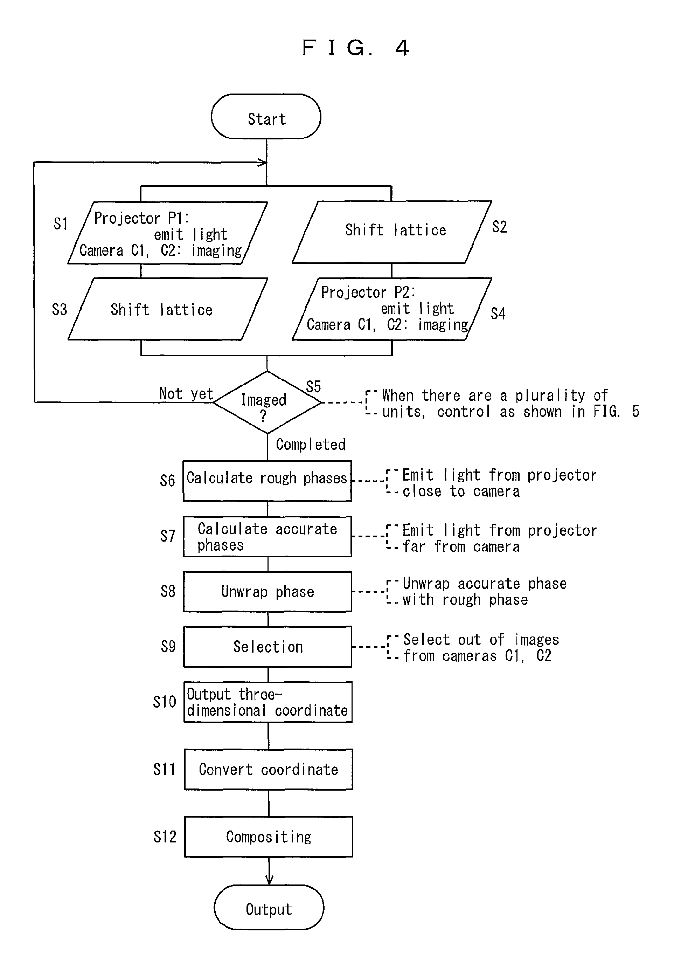

A phase unwrapping unit 22 converts the accurate phases θ of 0 to 2π into complete phases 2nπ + θ (where n is an integer), in which n denotes the pitch number from the reference point of the lattice. Phase unwrapping will be described in detail with reference to FIGS. 4 to 8. The measurement object 1 has an area in which one of the two cameras C1 and C2 performs measurement with more accuracy than the other. For example, in an area in the shadow of one camera, that is, in the area in which only a dark image is captured by the one camera, a three-dimensional shape is measured with higher accuracy based on an image captured by the other camera. A selection unit 24 selects the one of the three-dimensional coordinates obtained by the two cameras C1 and C2 that has higher measurement accuracy, for each area of the measurement object. A coordinate converter 26 converts the three-dimensional coordinates in coordinate systems in which the cameras C1 and C2 are respectively defined as references into three-dimensional coordinates in a reference coordinate system. A compositing unit 28 composites the three-dimensional coordinates of the surface of the measurement object that were obtained from the plurality of units 4 by performing averaging on the three-dimensional coordinates with the reliability, for example, serving as the weighting.

A background remover 30 separates the measurement object from the background, and stores an amplitude image and a phase image that were generated based on an image captured in a state where, for example, the measurement object does not exist. The amplitude image may be an image with the contrast of a sinusoidal wave lattice that was calculated based on the four images, and also have the highest brightness value, or the like. Furthermore, the phase image may be an image of phases extracted by, for example, the phase analyzer 20, and may also be an accurate phase image or a rough phase image in which values of the phases are 0 to 2π. The phase image is obtained while the phase analyzer 20 analyses the phases. When the phase of a pixel is assumed to be "a", data such as Asina is obtained, and thus when the phase α is obtained by the phase analyzer 20 for example, an amplitude A will be obtained. Alternatively, since data of Asinα and Acosα have been obtained, the square of the amplitude A will be obtained based on A²sin²α and A²cos²α. The amplitude image and the phase image are obtained at the same time when the measurement object is imaged. In the image including the measurement object, pixels that have a phase and an amplitude that has no variation from those of the background image belong to the background. Pixels that have a phase and an amplitude at least one of which has variation possibly belong to the measurement object, and are thus determined to be subject to three-dimensional measurement.

FIG. 4 shows a three-dimensional measurement algorithm according to the embodiment. Here, a case in which the upper and lower cameras C1 and C2 of one unit are used in combination with the projectors P1 and P2 of the same unit is considered, and since time is needed for shifting the lattice, the lattice of the projector P2 is shifted while light is emitted from the projector P1 and images are captured by the cameras C1 and C2 (steps 1 and 2). In contrast, while the lattice of the projector P1 is shifted, light is emitted from the projector P2 and images are captured by the cameras C1 and C2 (steps 3 and 4). By performing, in parallel, shifting of the lattice by one projector, and light emission by the other projector and imaging, imaging using the plurality of projectors is performed without extending the total imaging time. The above-described procedure is repeated until shift of the lattice ends (step 5).

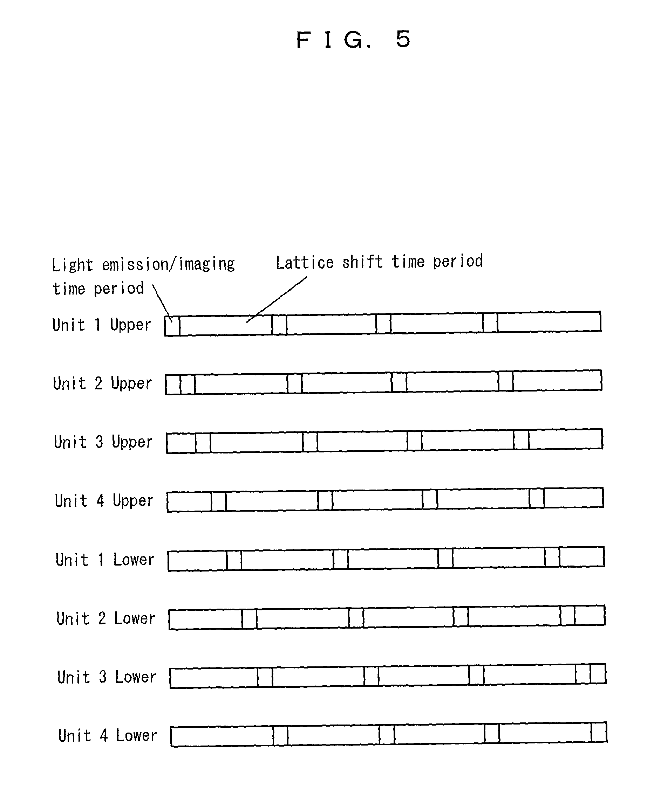

Since four units are used in the embodiment, FIG. 5 shows a pattern of projector light emission and the camera imaging, in which "upper" denotes the upper projector and "lower" denotes the lower projector. Since, in this way, eight projectors emit light four times for one second for example, and up to eight cameras perform imaging each time the light is emitted, up to 256 images in which the lattice is projected onto the measurement object are obtained. However, the total time period needed for imaging is 1/3 to 1/6 larger than the case where one projector is used.

When it is configured such that the rough phases vary by about up to 2π in the range in which the measurement object exists, it is not necessary to perform phase unwrapping for the rough phases. Positions on the measurement object surface are uniquely determined based on the rough phases although the determination has low accuracy. However, since distinction between the background and the measurement object is impossible based on the rough phases, the background is removed. Then, rough phases and accurate phases of the measurement object surface are obtained (steps 6 and 7). Then, with reference to the rough phases, the accurate phases in the range of 0 to 2π are converted into complete phases of 2nπ + θ (step 8). When the complete phases have been obtained by phase unwrapping, three-dimensional coordinates on the measurement object surface are obtained accurately. Furthermore, in step 9, it is determined which of the coordinates obtained from the cameras C1 and C2 are to be used based on the brightnesses or the like of the images captured by the cameras C1 and C2, for each area of the measurement object surface. In step 11, the coordinates are converted into that according to the reference coordinate system, and in step 12, the coordinates of the plurality of units are composited and output. In compositing, for example, the coordinates from the units are subjected to averaging with the reliability serving as the weighting. Furthermore, instead of the above-described selection, it is also possible that the coordinate systems are unified and then the coordinates obtained from the cameras C1 and C2 are subjected to averaging with the reliability serving as the weighting.

FIG. 6 shows rough phases and accurate phases that are seen from the camera C1. Each of the lines from the projectors P1 and P2 denotes one pitch of the lattice. The phases seen from the camera C1 largely vary with respect to the lattice from the projector P2 in the line of sight directions, and there are a plurality of points θ1 to θ4, and the like that give the same phase in the same sight line direction, and positions on the measurement object surface are not uniquely determined. The phases obtained when the lattice from the projector P1 is viewed from the camera C1 vary only slightly, and there is no other point that gives the same phase in a measurement range for example, making it possible to uniquely determine positions on the measurement object surface although the determination has low accuracy.

This situation is shown in FIG. 7, in which the horizontal axis denotes positions in the sight line direction. Rough phases using light emitted from the projector P1 are θP1, and accurate phases using light emitted from the projector P2 are θP2. The rough phases θP1 have low accuracy but cover a wide range of depth, and the accurate phases θP2 have high accuracy but cover only a narrow range, and there are a plurality of points that give the same phase in the measurement range. Therefore, by unwrapping the accurate phases θP2 using the rough phases θP1, complete phases ϕ are obtained. As a specific method, a range of the complete phases ϕ (that is, a range of the values that n can have) is defined for each pixel using the rough phases θP1, for example, and the phases θP2 are converted into complete phases ϕ. Alternatively, the complete phases ϕ for some of the pixels are obtained in the above-described manner, the range of the variation of the complete phases ϕ with respect to the other pixels is determined based on the variation of the rough phases θP1 between the pixels, and thereby the accurate phases θP2 are converted into complete phases ϕ.

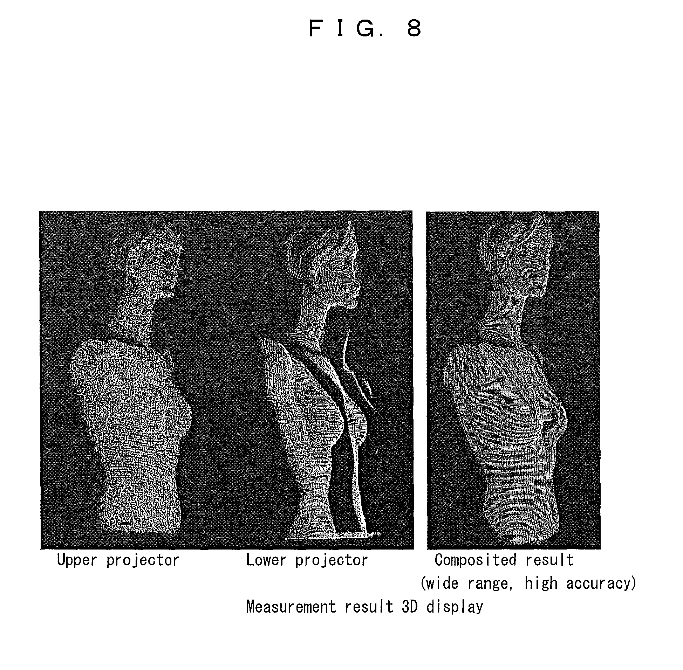

FIG. 8 shows three-dimensional point group data obtained from the rough phases using the light emitted from the upper projector P1, three-dimensional point group data obtained from the accurate phases using the light emitted from the lower projector P2, and three-dimensional point group data obtained according to the present embodiment. The upper camera C1 is used for these cases. In FIG. 8, variation in brightness shows the accuracy in measurement, and the variation in data is significant in the measurement using the upper projector P1. Furthermore, the data is discontinuous in the measurement using the lower projector P2. In contrast, according to the present embodiment, the variation in data is small and the data is basically continuous. This means that the shape of the measurement object is obtained with high accuracy in a wide range.

According to the embodiment, the following effects are obtained:
1) A three-dimensional shape is measured accurately by obtaining rough phases and accurate phases using two or more projectors for one camera;
2) The measurement time period is not substantially extended by performing light emission by one projector and imaging by the camera, and shifting the lattice of the other projector, in parallel; and
3) When two or more projectors are used in combination with two or more cameras, a three-dimensional shape is measured more accurately without extending the measurement time period.

### List of Reference Numerals

1 Measurement object
2 Three-dimensional measurement apparatus
4 Unit
6 Controller
7 LAN
8 Personal computer for measurement
9 Shift mechanism
10 Monitor
12 Input/output
14 User input
16 Display controller
18 Output
20 Phase analyzer
22 Phase unwrapping unit
24 Selection unit
26 Coordinate converter
28 Compositing unit
30 Background remover
P1, P2 Projector
C1, C2 Camera

## Claims

1. A three-dimensional measurement apparatus (2) comprising: a projector (P1; P2) that projects a lattice onto a measurement target object (1) such that the lattice is shiftable; a camera (C1) that images the measurement target object (1); and a computer (8) that obtains phases of the measurement target object (1) with respect to the lattice from a plurality of images captured while position of the lattice is shifted, and converts the obtained phases into a three-dimensional shape of the measurement target object (1), **characterized in that**
two projectors (P1; P2) are respectively provided at positions that are relatively close to and far from the camera (C1), and
the computer (8) includes: a phase analyzer (20) that obtains rough phases of a surface of the measurement target object (1) from images captured during projection from the projector (P1) that is provided at the position close to the camera (C1), and obtains accurate phases of the surface of the measurement target object (1) from images captured during projection from the projector (P2) that is provided at the position far from the camera (C1); and a phase unwrapping unit (22) that, using the rough phases, converts the accurate phases into phases by which positions on the surface of the measurement target object (1) in line of sight directions from the camera (C1) are uniquely determined.

2. The three-dimensional measurement apparatus (2) according to claim 1, **characterized in that**
the lattice has a periodic lattice pattern,
letting one period of the lattice be 0 or more to less than 2π, the accurate phases are θ, where 0 ≤ θ < 2π, and
the phase unwrapping unit (22) is configured to obtain n, which denotes the number of periods from a reference point of the lattice, using on the rough phases, and obtain 2nπ + θ as the phases by which the positions are uniquely determined.

3. The three-dimensional measurement apparatus (2) according to claim 2, **characterized by** further comprising,
a controller (6) that controls the two projectors (P1; P2) such that the projector (P2) that is provided relatively far from the camera (C1) projects the lattice while the projector (P1) that is provided relatively close to the camera (C1) shifts the lattice, and the projector (P1) that is provided relatively close to the camera (C1) projects the lattice while the projector (P2) that is provided relatively far from the camera (C1) shifts the lattice.

4. The three-dimensional measurement apparatus (2) according to claim 3, **characterized in that**
the camera (C1) serves as a first camera, and a second camera (C2) is further provided in a vicinity of the projector (P2) that is provided relatively far from the first camera (C1), and
the controller (6) is configured to perform control such that both the first camera (C1) and the second camera (C2) image the measurement target object (1) when the projector (P1) that is provided relatively close to the first camera (C1) projects the lattice and also when the projector (P2) that is provided relatively far from the first camera (C1) projects the lattice.

5. A three-dimensional measurement method in which projectors (P1; P2) project a lattice a plurality of times onto a measurement target object (1) while shifting the lattice, a camera (C1) images the measurement target object (1) onto which the lattice is projected, and a computer (8) obtains phases of the measurement target object (1) with respect to the lattice from a plurality of images in which a position of the lattice is shifted, and converts the obtained phases into a three-dimensional shape of the measurement target object (1), the method being **characterized by**:
a step for providing two projectors (P1; P2) respectively at positions that are relatively close to and far from the camera (C1);
a step for obtaining, by a phase analyzer (20) of a three-dimensional measurement apparatus (2), rough phases of a surface of the measurement target object (1) from images captured during projection from the projector (P1) that is provided at the position close to the camera (C1);
a step for obtaining, by the phase analyzer (20) of the three-dimensional measurement apparatus (2), accurate phases of the surface of the measurement target object (1) from images captured during projection from the projector (P2) that is provided at the position far from the camera (C1); and
a step for converting, by a phase unwrapping unit (22) of the three-dimensional measurement apparatus (2), the accurate phases, using the rough phases, into phases by which positions on the surface of the measurement target object (1) in line of sight directions from the camera (C1) are uniquely indicated.
